# EUROPÄISCHE PATENTANMELDUNG

(11) **EP 3 418 707 A1**
(43) Veröffentlichungstag der Anmeldung: **26.12.2018**
(21) Anmeldenummer: 18179071.8
(22) Anmeldetag: 21.06.2018
(51) Int. Cl.: G01L 19/00, G01L 19/14

(54) **MONTAGEFÄHIGER DRUCKSENSOR**

(30) Priorität: 21.06.2017 DE 102017113671
(71) Anmelder: First Sensor Mobility GmbH, 01099 Dresden (DE)
(72) Erfinder: PETERSEN, Lars, 01129 Dresden (DE); HAGEDORN, Sebastian, 01309 Dresden (DE)
(74) Vertreter: Lippert Stachow Dresden

(57) **Zusammenfassung**

Es wird ein Drucksensor 1 angegeben, welcher einen Druckmessumformer 8 mit einer Messmembran 10 und einem drucksensitiven Element 14 aufweist. Der Drucksensor 1 umfasst ein Montageelement 6 und ein Druckeingangselement 4, welches zur Bildung eines Druckkanals 2 ein unteres, offenes Ende und ein oberes, durch die Messmembran 10 verschlossenes Ende aufweist, wobei der Druckmessumformer 8 im Montageelement 6 angeordnet ist und das Montageelement 6 das Druckeingangselement 4 zumindest teilweise umhüllt. Die Wandung des Druckkanals 2 ist zweischalig ausgebildet, indem die innere Schale durch das Druckeingangselement 4 und die äußere Schale durch das Montageelement 6 gebildet ist. Beide Schalen sind miteinander dicht verbunden sind. Das Druckeingangselement 4 erstreckt sich derart in Richtung zum unteren Abschluss des Montageelements, dass das Medium im montierten Zustand des Drucksensors 1 nur auf die Bodenfläche 30a des Druckeingangselements 4 oder nur gemeinsam auf die benachbarten Bodenflächen 30a, 30b von Druckeingangselement 4 und Montageelement 6 wirkt. (Fig. 1)

## Beschreibung

Die vorliegende Erfindung betrifft einen Drucksensor zur Druckmessung mit einem eine Messmembran aufweisenden Druckmessumformer, der über einen Druckkanal mit einem Medium verbindbar ist, dessen Druck zu messen ist, und mit einem Montageelement zur Montage des Drucksensors an oder in einem externen, das Medium aufweisenden Objekt. Der Druckkanal ist an einem Ende durch die Messmembran verschlossen und am anderen Ende offen, so dass das Medium auf die Messmembran einwirkt.

Drucksensoren werden allgemein zur Messung des Drucks von Fluiden, d. h. Flüssigkeiten und/oder Gasen, hier auch allgemein als Medium bezeichnet, eingesetzt, insbesondere als Bestandteil von Steuerungen oder Regelungen in technischen Anwendungen, beispielsweise im Automobilbereich, in der Klimatechnik, Medizintechnik oder anderen Technikbereichen. Zur Messung des Fluiddrucks wird die eine Seite der Messmembran, regelmäßig als Rückseite bezeichnet, mit dem Fluid beaufschlagt, das über den Druckkanal der Messmembran zugeleitet wird. Die andere Seite der Membran, die dem Fluid abgewandt ist und regelmäßig als Vorderseite bezeichnet ist, weist ein oder mehrere drucksensitive Elemente auf. Sie ist, je nach verwendetem Messregime (Differenzdruckmessung oder Absolutdruckmessung, absolut oder relativ) einem Referenzdruck ausgesetzt, so dass bei einer Druckdifferenz zwischen Vorder- und Rückseite die Messmembran mechanisch ausgelenkt wird. Diese Auslenkung wird durch die drucksensitiven Elemente erfasst. Aus den Signalen der drucksensitiven Elemente kann dann mittels einer Auswerteelektronik auf den Fluiddruck rückgeschlossen werden. Dabei sind aus dem Stand der Technik unterschiedlichste Druckmessumformerprinzipien bekannt, die auf die jeweiligen Anwendungen zugeschnitten sind.

Der Druckmessumformer ist regelmäßig in einem Montageelement angeordnet und der Druckkanal durch das Montageelement gebildet. Das Montageelement weist eine für die Verwendung des Drucksensors, seine Handhabbarkeit und Fertigungstechnologie geeignete Form und Größe auf, so dass der Druckmessumformer und Druckkanal an oder in einem Objekt montierbar sind, an welchem der Drucksensor zur Anwendung kommen soll. Das Montageelement kann geeignete Verbindungsmittel aufweisen, mit denen eine Stoff-, oder kraft- oder formschlüssige Verbindung zum Objekt herstellbar ist, beispielsweise Gewinde, Flansch, Pressverbinder, Schweiß- oder Klebefläche oder andere.

Dem Montageelement sind regelmäßig auch Dichtelemente zugeordnet, die eine dem Fluid gegenüber langlebig dichte Verbindung zwischen dem Drucksensor und dem Objekt sowie zwischen dem Druckmessumformer sowie dem Druckkanal und dem Montageelement realisieren. Das Material des Montageelements wird regelmäßig durch seine Verbindungen zum Objekt und seine Herstellungskosten bestimmt. Das Montageelement kann mehrteilig ausgebildet sein, so dass zu schützende Komponenten wie der Druckmessumformer, elektronische Bauelemente, Kontakte und Leiterbahnen zum Aufnehmen, Vorverarbeitung und/oder Verarbeiten und Weiterleiten der Messsignale sowie das Board, auf dem diese Elemente angeordnet sind, auf geeignete Weise durch eine Kappe oder einen Deckel eingeschlossen werden können.

Für die Anwendbarkeit eines Drucksensors in den verschiedenen Technikgebieten und damit zusammenhängend den verschiedenen Fluiden und Druck- sowie Temperaturbereichen sowie für die Herstellung, die Zuverlässigkeit und Lebensdauer des Drucksensors sind insbesondere die verwendeten Materialien und Materialkombinationen sowie die Verbindungen zwischen den einzelnen Komponenten von Bedeutung. So müssen die verwendeten Materialien beständig gegenüber dem Fluid sein, häufig auch an Positionen, wo das Fluid nicht unmittelbar aber im Falle versagender Verbindungen anliegt. Gleiches gilt für die Verbindungen. Diese müssen unter den maximal zu erwartenden mechanischen, chemischen und thermischen Bedingungen dicht gegenüber dem Fluid und/oder einem Referenzdruck sein. Diese Anforderungen stehen sich mitunter diametral entgegen, insbesondere an stark druck- und temperaturbelasteten Komponenten und Verbindungen. Weiter sind sie mit dem Ziel nach Kostenoptimierung für den Drucksensor schwer vereinbar.

Ausgehend von dem vorbeschriebenen Stand der Technik beschäftigt sich die Erfindung mit der Aufgabe, die Zuverlässigkeit und Dauerhaftigkeit des Drucksensors insbesondere unter anspruchsvollen chemischen, thermischen und hydraulischen bzw. pneumatischen Bedingungen zu erhöhen, bei möglichst geringeren Kosten pro Drucksensor. Weiter soll der Drucksensor durch weitere Messzugänge erweiterbar sein, beispielsweise für Temperatur-, Feuchtigkeits-, Gasanalyse- oder Ortsmessungen oder andere Messwerte, die in Verbindung mit der Druckmessung von Interesse sind.

Das wesentliche Konzept der Erfindung ist dahingehend zu beschreiben, dass sich die Gliederung des Drucksensors in seine Komponenten an deren zu realisierenden Funktionen orientiert. In Verbindung damit sind erforderliche Verbindungsstellen und/oder Dichtflächen, nachfolgend allgemein als Verbindungsflächen bezeichnet, reduziert und/oder so angeordnet, dass auf eine Verbindungsstelle oder Dichtfläche einwirkende Kräfte im Vergleich zum Stand der Technik reduziert oder so gerichtet sind, dass sie nicht entgegen der Verbindung, bevorzugt in Richtung der Verbindung wirken.

Nachfolgend werden zur Realisierung des Konzepts verwendete Merkmale beschrieben. Diese wird der Fachmann in verschiedenen Ausführungsformen verschieden miteinander kombinieren, soweit ihm das für einen Anwendungsfall sinnvoll und geeignet erscheint.

Ein Merkmal besteht in der zweiteiligen, d. h. zweischaligen Ausführung der Wandung des Druckkanals. Dieser wird gebildet durch ein im Wesentlichen hohlzylinderförmiges Druckeingangselement und ein das Druckeingangselement umhüllendes Montageelement, wobei beide Schalen miteinander dem Fluid gegenüber dicht verbunden sind. Das Druckeingangselement weist eine Eingangsseite mit einer den Eingang begrenzenden Bodenfläche auf, wo das Medium in das Druckeingangselement eintritt. Der Eingangsseite gegenüber liegt die Membranseite, wo der Druckkanal im Druckeingangselement mittels der Messmembran verschlossen ist.

Da das Montageelement der Halterung und Montage des Drucksensors an oder in einem externen Objekt dient und zudem der Druckmessumformer im Montageelement angeordnet ist, kann das Montageelement derart ausgebildet sein, dass nur Abschnitte davon der Ausbildung der äußeren Schale des Druckkanals dienen. Ebenso ist es möglich, dass nur ein unterer Abschnitt des Druckkanals zweischalig ausgebildet ist.

Das Druckeingangselement erstreckt sich in Richtung zum offenen Ende des Druckkanals durch das Montageelement bis nahe an dessen unteren Abschluss. Die Formulierung "in Richtung zum unteren Abschluss des Montageelements" schließt unter der Maßgabe, dass das Druckeingangselement und das Montageelement gemeinsam die Mantelfläche des Druckkanals bilden und dass das Medium nur auf Bodenfläche des Druckeingangselements oder nur gemeinsam auf benachbarte Bodenflächen von Druckeingangselement und Montageelement wirkt, verschiedene Lagen der beiden Bodenfläche relativ zueinander ein. So kann das Druckeingangselement innerhalb des Montageelements enden, mit dem Montageelement abschließen oder darüber hinaus ragen. In Abhängigkeit von der Geometrie des Druckeingangselements die Differenz zwischen beiden Bodenplatten, zur Achse des Druckkanals gemessen, unterschiedlich groß sein. Erfindungsgemäß ist die Differenz so bemessen, dass das Medium im montierten Zustand des Drucksensors nur auf die Bodenfläche des Druckeingangselements oder nur gemeinsam auf benachbarte Bodenflächen von Druckeingangselement und Montageelement wirkt. Die Bodenflächen, die regelmäßig senkrecht zur Achse des Druckkanals liegen, können auch, beispielsweise zur Aufnahme von Dichtelementen oder zur Montage am externen Objekt oder aus anderen Gründen, Rück- und Vorschprünge oder zumindest abschnittsweise Neigungen relativ zueinander aufweisen. sofern gewährleistet ist, dass die Verbindung zwischen den beiden Komponenten schwächende Kräfte, insbesondere Scherkräfte, verhindert oder zumindest reduziert werden können.

Der Begriff "unten" ist auf den Zugang des Mediums in das Druckeingangselement bezogen und beschreibt die Seite des Drucksensors und dessen Komponenten, welche dem Zugang des Mediums zugewandt ist. Der Begriff ist nicht auf die Schwerkraftrichtung bezogen und somit unabhängig von der Einbausituation zu verstehen.

Die Formulierung "im Wesentlichen hohlzylinderförmig" in Bezug auf das Druckeingangselement schließt Vor- oder Rücksprünge in der äußeren Mantelfläche des Druckeingangselements ein, die beispielsweise dessen Verbindung und Abdichtung mit dem bzw. zum Montageelement dienen, so dass eine dauerhafte und dem Fluid gegenüber dichte Verbindung zwischen beiden Komponenten besteht. Die Verbindung kann mit bekannten Mitteln stoff-, kraft- oder formschlüssig ausgebildet sein. Vor- und Rücksprünge können ebenso als Dichtflächen ausgebildet sein, wobei deren axiale, d.h. an der Kanalachse ausgerichtete Dichtflächen von Vorteil sind, da sie in Wirkrichtung des Drucks angeordnet sein können.

Die Formulierung schließt auch solche Ausführungen ein, in denen der Durchgang durch den Zylinder des Druckeingangselements, welcher den Druckkanal bildet, in mehrere Teildurchgänge unterteilt ist oder mehrere Hohlzylinder konzentrisch oder nebeneinander liegend und/oder miteinander verbunden ausgebildet sind. Damit stehen neben dem Druckkanal weitere Durchgänge oder Öffnungen zur Verfügung, die hier zur Unterscheidung als Messports bezeichnet und für weitere Sensoren, wie oben angeführt, nutzbar sind. Die Messports können zum Medium hin offen oder verschlossen sein. Deren Design und unterer Abschluss zum Medium hin sowie zum entgegengesetzten Ende hin kann dem verwendeten weiteren Sensor angepasst sein. Bei Temperatursensoren beispielsweise ist es von Vorteil, wenn der Messport zum Medium hin geschlossen ist, alternativ durch den Temperatursensor selbst oder durch die Wandung des Druckeingangselements.

Die Trennung der Ausbildung der Druckkanalwandung in Druckeingangselement und Montageelement in Verbindung mit einem maßgeblichen oder alleinigen Anliegen des Fluids am Druckeingangselement verbessert die Materialoptimierung für beide Komponenten. Gegebenenfalls können geringe, nicht vermeidbare Flächen des Montageelements, an denen es in Kontakt zum Fluid steht durch geeignete Materialien abgedeckt werden.

Durch die zweikomponentige Ausführung des Druckkanals kann das Material des Druckeingangselements gezielt auf das Fluid und mit dem Fluid verknüpfte chemische, thermische und mechanische Belastungen eingestellt werden. Gleichzeitig kann durch ein optimiertes Design, das auch günstige Verbindungs- und Dichtflächen am Hohlzylinder einschließt, der Material- und Kostenaufwand für diese Komponente reduziert werden. Geeignet sind beispielsweise Edelstahl oder andere speziell auf das Fluid abgestimmte Materialien oder Legierungen.

Die Montagekomponente kann hingegen konkret auf die Einbausituation am Objekt abgestimmt sein und deutlich kostengünstigeres Material verwenden. Geeignet sind beispielsweise auch Kunststoff oder Aluminium.

Der Verschluss des Druckkanals im Druckeingangselement mittels der Messmembran des Druckmessumformers kann durch eine einteilige oder zweiteilige Ausführung von Druckeingangselement und Druckmessumformer ausgebildet sein. Ebenso kann das Druckeingangselement selbst ein. oder mehrteilig sein. Einteilige Ausführungen haben den Vorteil, dass eine Verbindungsstelle im Druckkanal, welche aufgrund ihrer Lage rechtwinklich zur Achse des Druckkanals durch die axial wirkende Druckkraft des Mediums hoch belastet ist, vermieden wird. Mittels einer alternativen zwei- bzw. mehrteiligen Ausführung sind beide miteinander zu verbindenen Elemente, d. h. Druckeingangselement und Druckmessumformer bzw. Abschnitte des Druckeingangselements, durch eine geeignete Fügetechnik fluidbeständig miteinander verbindbar und eine Optimierung der Materialauswahl ist möglich.

Alternativ kann die zweiteilige Ausführung vergleichbar der Verbindung zwischen Montageelement und Druckeingangselement modifiziert werden, indem die sich gegenüber liegenden Verbindungsflächen am Druckmessumformer und Druckeingangselement bzw. an den Abschnitten des Druckeingangselements zumindest teilweise auch eine solche Ausrichtung haben, dass die Verbindungsfllächen parallel oder beispielsweise mit einem Winkel von kleiner 45°, bevorzugt kleiner 30°, bevorzugt kleiner 15° zur Achse des Druckkanals verläuft. Eine derart liegende Fläche soll nachfolgend als radiale Verbindungsfläche bezeichnet sein. In einer solchen Ausgestaltung ist der Druckkanal zumindest im Bereich der radialen Verbindungsflächen ebenfalls zweischalig ausgebildet, wobei eine Schale durch die Wandung des Druckeingangselements und einer zweiten Schale durch die Wandung des Druckmessumformers gebildet ist. Im Falle eines mehrteiligen Druckeingangselements werden die beiden Schalen durch die miteinander zu verbindenden Abschnitte des Druckeingangselements gebildet.

Als weiteres Merkmal kann das untere, dem Medium zugewandte, offene Ende des Druckeingangselements eine axiale Dichtfläche, bei der die axialen Druckkräfte verstärkend auf die Dichtfläche wirken, aufweisen. Diese dient der Abdichtung des Drucksensors mit dem Objekt im montierten Zustand. Die Dichtfläche kann in Form einer frontbündigen Dichtung durch die Bodenfläche des hohlzylinderförmigen Druckeingangselements gebildet sein oder durch eine am offenen Ende des Druckeingangselements angeordnete und parallel zur Bodenfläche liegende axiale Fläche. Der Abstand der Dichtfläche zur Bodenfläche ist dabei kleiner als die halbe Länge des Druckkanals. Er ist beispielsweise kleiner als der Durchmesser des Druckkanals. Eine Dichtfläche kann beispielsweise flanschförmig ausgebildet sein, wodurch sie auch der Montage des Drucksensors am Objekt dienen kann.

Der Dichtfläche kann auch ein axiales Dichtelement zugeordnet sein. Alternativ oder ergänzend kann ein zur Dichtfläche korrespondierendes Dichtelement auch dem Objekt zugeordnet sein.

Für die zuvor beschriebenen Dichtelemente kommen in Design und Material die gängigen Ausführungen in Betracht.

Für die Häusung der zu schützende Komponenten des Drucksensors, wie Druckmessumformer mit drucksensitiven Elementen, elektronische Bauelemente, Kontakte und Leiterbahnen zum Aufnehmen, Vorverarbeitung und/oder Verarbeiten und Weiterleiten der Messsignale sowie das Board, auf dem diese Elemente angeordnet sind, mittels Gehäuse oder zweiteiligem Montageelement wie auch zur elektrischen Kontaktierung des Drucksensors stehen dem Fachmann verschiedene Varianten zur Verfügung.

Anhand der zugehörigen Zeichnungen sollen die zuvor beschriebenen Merkmale klarstellend, aber nicht beschränkend am Beispiel erläutert werden. Die Zeichnungen zeigen in
- Fig. 1: eine Ausgestaltung eines Drucksensors, dessen Druckeingangselement mit dem Druckmessumformer einteilig ausgebildet ist und in
- Fig. 2: einen Drucksensor, in dessen Druckeingangselement ein weiterer Messport für einen Temperatursensor ausgebildet ist.

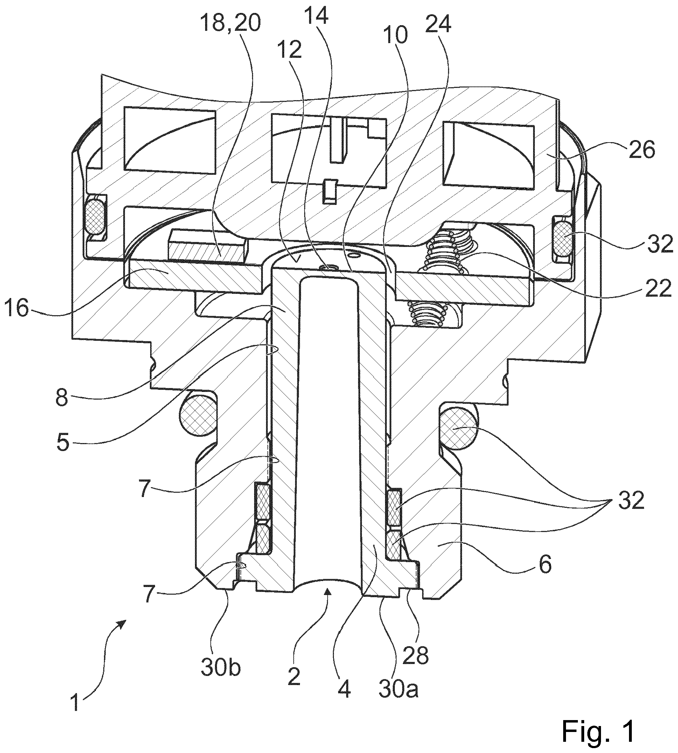

Fig. 1 zeigt den Druckkanal 2 des Drucksensors 1, der durch das Druckeingangselement 4 und das umhüllende Montageelement 6 gebildet ist. Das Druckeingangselement 4 ist in einen korrespondierenden Durchgang 5 des Montageelements 6 eingefügt und mit diesem durch Kleben oder Schweißen verbunden. Die lediglich beispielhaft dargestellten Verbindungsflächen 7 sind durch gestrichelte Linien gekennzeichnet.

Das Druckeingangselement 4 ist als ein am unteren Ende, gemeint ist damit im montierten Zustand zum Medium (nicht dargestellt) hin, offener und am gegenüber liegenden oberen Ende geschlossener Hohlzylinder ausgebildet. Der obere Verschluss ist einstückig durch das Material der Wandung Hohlzylinders ausgebildet und weist eine solche Dicke auf, dass er sich unter Einwirkung des dort anliegenden Fluids verformt. Der obere geschlossene Teil des Hohlzylinders bildet somit den Druckmessumformer 8 mit der Messmembran 10. Auf der dem Fluid abgewandten Seite, der Vorderseite 12, sind geeignete drucksensitiven Elemente 14 angeordnet.

Ein Board 16, auf dem elektronische Bauelemente 18, gegebenenfalls auch integrierte Schaltungen 20 (gemeinsam dargestellt durch einen symbolischen Quader), und elektrische Kontakte 22 angeordnet sind, weist eine Öffnung 24 auf, durch welche der Druckmessumformer 8 ragt. Diese Elemente sind durch eine Kappe 26 abgedeckt, die gegenüber dem umgebenden Raum über ein geeignetes Dichtelement 32 mit dem Montageelement 6 verbunden ist.

Am unteren, offenen Ende ist das Druckeingangselement 4 flanschartig vergrößert, so dass eine nach unten weisende, axiale Dichtfläche 28 ausgebildet ist, die einen Abstand zu den Bodenflächen 30a, 30b des Druckeingangselements 4 und des Montageelements 6 aufweist. Der Abstand zwischen Dichtfläche und Bodenfläche 30a des Druckeingangselements 4 ist beispielsweise kleiner als der Durchmesser des Druckkanals 2 und beispielsweise auch kleiner als die Wandungsdicke des Druckeingangselements 4. Alternativ oder ergänzend kann auch die Bodenfläche 30 als Dichtfläche 28 genutzt werden. Weitere Alternativen hinsichtlich der geometrischen Relationen und der Gestaltung der Dichtfläche können zweckdienlich sein. Die Dichtfläche 28 dient einer gegenüber dem Fluid dichten Montage des Drucksensors 1 in einem das Fluid enthaltenden Objekt (nicht dargestellt).

Das Montageelement 6 weist im mittleren Bereich an seiner Außenwandung und hinter dem flanschartigen Abschnitt des Druckeingangselements 4 an seiner Innenwandung beispielhaft weitere geeignete Dichtelemente 32 auf, die einen Austritt des Fluids aus dem Objekt und in den Drucksensor 1 verhindern sollen.

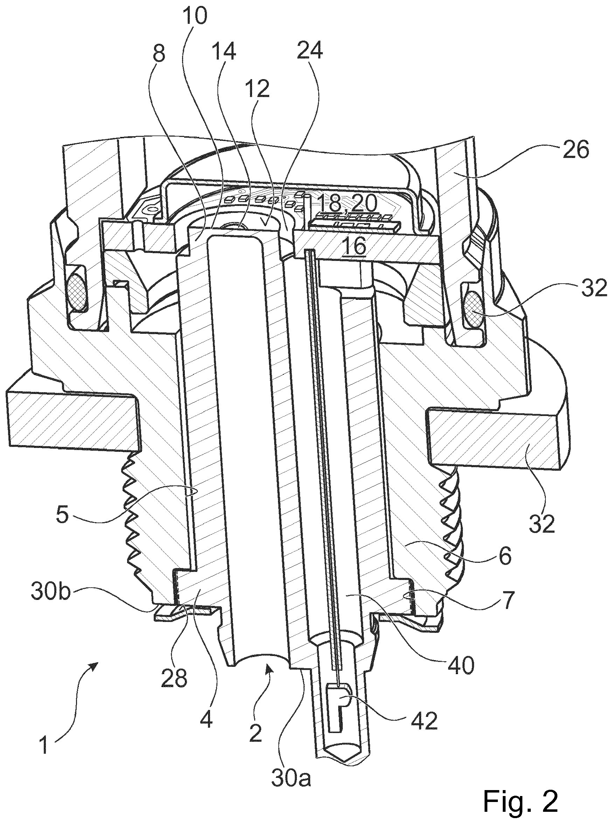

Der Drucksensor 1 gemäß Fig. 2 unterscheidet sich vom den der Fig. 1 durch die Ausbildung eines weiteren Kanals im Druckeingangselement 4, der als Messport 40 für einen Temperatursensor 42 verwendet wird. Der Messport 40 verläuft parallel zum Druckkanal 2, ragt am unteren Ende über den Druckkanal 2 hinaus und ist dort verschlossen, im Ausführungsbeispiel durch einen nicht Sackkanal. Der Temperatursensor 42 ist elektrisch mit dem Board 16 verbunden.

Das Montageelement 6 weist im unteren Bereich seiner Außenwandung ein Gewinde 44 auf, mit welchem der Drucksensor 1 in eine korrespondierend ausgebildete Öffnung eines Objekts (nicht dargestellt) eingeschraubt werden kann. Mittels eines am oberen Ende des Gewindes 44 angeordneten Dichtelements 32 erfolgt ein gegenüber dem im Objekt befindlichen Fluid (nicht dargestellt) dichter Abschluss der Schraubverbindung.

In Bezug auf die weiteren, mit dem Drucksensor 1 in Fig. 1 übereinstimmenden Komponenten, die im Übrigen gleiche Bezugszeichen aufweisen, wird auf die dortigen Darlegungen verwiesen.

Drucksensoren 1 gemäß Fig. 2, auch als Druck-Temperatur-Sensor bezeichnet, werden beispielsweise für Klimaanlagen verwendet.

### Montagefähiger Drucksensor

### Bezugszeichenliste

- 1: Drucksensor
- 2: Druckkanal
- 4: Druckeingangselement
- 5: Durchgang
- 6: Montageelement
- 7: Verbindungsfläche
- 8: Druckmessumformer
- 10: Messmembran
- 12: Vorderseite
- 14: drucksensitives Element
- 16: Board
- 18: Bauelement
- 20: Schaltung
- 22: elektrischer Kontakt
- 24: Öffnung
- 26: Kappe
- 28: Dichtfläche
- 30a: Bodenfläche Druckeingangselement
- 30b: Bodenfläche Montageelement
- 32: Dichtelement
- 40: Messport
- 42: Temperatursensor
- 44: Gewinde

## Patentansprüche

1. Drucksensor zur Druckmessung mit einem eine Messmembran aufweisenden Druckmessumformer (8), der über einen Druckkanal (2) mit einem Medium, dessen Druck zu messen ist, verbindbar ist, folgende Komponenten umfassend:
- einen Druckmessumformer (8) mit einer Messmembran (10) und einem drucksensitiven Element (14) zur Erfassung einer Auslenkung der Messmembran (10),
- einen Druckkanal (2) zur fluidischen Verbindung des Druckmessumformers (2) mit dem Medium dessen unteres Ende zum Medium offen und oberes Ende durch die Messmembran (8) des Druckmessumformers (10) verschlossen ist,
- ein Montageelement (6) zur Halterung und Montage des Drucksensors (1) an oder in einem externen, das Medium aufweisenden Objekt,
- ein im Wesentlichen hohlzylinderförmiges Druckeingangselement (4), welches zur Bildung des Druckkanals (2) ein unteres, durch eine Bodenfläche (30a) des Druckeingangselements (4) begrenztes offenes Ende und ein oberes, durch die Messmembran (10) des Druckmessumformers (8) verschlossenes Ende aufweist,
- wobei der Druckmessumformer (8) im Monageelement (6) angeordnet ist und das Montageelement (6) das Druckeingangselement (4) zumindest teilweise umhüllt,
- wobei die Wandung des Druckkanals (2) zumindest abschnittsweise zweischalig ausgebildet ist, indem die innere Schale durch das Druckeingangselement (4) und die äußere Schale durch das Montageelement (6) gebildet ist, und beide Schalen miteinander dem Fluid gegenüber dicht verbunden sind, und
- sich das Druckeingangselement (4) derart in Richtung zum unteren Abschluss des Montageelements (6) oder darüber hinaus erstreckt, dass das Medium im montierten Zustand des Drucksensors (1) nur auf die Bodenfläche (30a) des Druckeingangselements (4) oder nur gemeinsam auf die benachbarten Bodenflächen (30a, 30b) von Druckeingangselement (4) und Montageelement (6) wirkt.

2. Drucksensor nach Anspruch 1, wobei zumindest ein Dichtelement (32) zwischen zumindest zwei der Komponenten aus folgender Liste angeordnet ist: Druckmessumformer (8), Druckeingangselement (4) und Montageelement (6).

3. Drucksensor nach einem der vorstehenden Ansprüche, wobei das Druckeingangselement (4) und der Druckmessumformer (8) einteilig ausgebildet ist.

4. Drucksensor nach einem der Ansprüche 1 oder 2, wobei das Druckeingangselement (4) und der Druckmessumformer (8) und/oder das Druckeingangselement (4) zweiteilig ausgebildet sind, indem der Druckkanal (2) im Bereich der Verbindungsflächen vom Druckmessumformer (8) zum Druckeingangselement (4) und/oder von einem ersten zu einem zweiten Abschnitt des Druckeingangselements (4) zweischalig ausgebildet ist, mit einer durch das Druckeingangselements (4) gebildeten ersten Schale und einer durch den Druckmessumformer (8) gebildeten zweiten Schale und/oder mit einer durch einen ersten Abschnitt des Druckeingangselements (4) gebildeten ersten Schale und einer durch einen zweiten Abschnitt des Druckeingangselements (4) gebildeten zweiten Schale.

5. Drucksensor nach einem der vorstehenden Ansprüche, wobei das Druckeingangselement (4) einen Messport (40) aufweist.

6. Drucksensor nach Anspruch 5, wobei im Messport (40) ein Temperatursensor (42) angeordnet und der Messport (40) mediendicht verschlossen ist.

7. Drucksensor nach einem der vorstehenden Ansprüche, wobei das untere, dem Medium zugewandte, offene Ende des Druckeingangselements (4) eine axiale Dichtfläche (28) aufweist, zur Abdichtung des Drucksensors (1) mit dem externen Objekt im montierten Zustand.
